# EUROPÄISCHE PATENTSCHRIFT

(11) **EP 0 577 963 B1**
(45) Veröffentlichungstag und Bekanntmachung des Hinweises auf die Patenterteilung: **16.09.1998**
(21) Anmeldenummer: 93108542.7
(22) Anmeldetag: 27.05.1993
(51) Int. Cl.: F16C 29/06

(54) **Linearführung**
Linear guide
Guide linéaire

(30) Priorität: 09.07.1992 DE 9209212 U
(43) Veröffentlichungstag der Anmeldung: 12.01.1994
(73) Patentinhaber: Rixen, Wolfgang, Dipl.-Ing., 42699 Solingen (DE); Pies, Gerrit, 42699 Solingen (DE)
(72) Erfinder: Rixen, Wolfgang, Dipl.-Ing., 42699 Solingen (DE); Pies, Gerrit, 42699 Solingen (DE)
(74) Vertreter: Eichler, Peter, Dipl.-Ing.

(56) Entgegenhaltungen:
- EP-A- 0 171 700
- EP-A- 0 187 336
- EP-A- 0 245 656
- EP-A- 0 463 858
- US-A- 4 573 747
- US-A- 4 630 872

## Beschreibung

Die Erfindung betrifft eine Linearführung mit zwei beiderseits eines Schienenkörpers vorspringend angeordneten, achsparallel zueinander verlaufenden Führungsschienen und einem darauf längsverschiebbar geführten Schlitten, der sich dabei über je zwei in seitlichen, die Führungsschienen umgreifenden Lagerwangen des Schlittens gelegene Linear-Kugellager an zwei verschiedenen Umfangsstellen jeder Führungsschiene abstützt, wobei ein Umlaufkörper jedes Linear-Kugellagers einzeln in den Lagerwangen des Schlittens mit einer Stellschraube radial in Richtung auf die Führungsschiene verstellbar gelagert ist.

Linearführungen sind z.B. durch die EP-C-0 080 515 oder die EP-C-0 245 656 bekannt. Sie sind dazu bestimmt, möglichst exakte Längsverschiebungen von auf dem Führungsschlitten anzubringenden Bearbeitungs-Werkzeugen und dergleichen Arbeitsmitteln zu ermöglichen, wie sie auf den verschiedensten Gebieten, beispielsweise der Feinmechanik aber auch zur Bearbeitung dünner Platten etwa in der Elektronik-Industrie u.dgl. mehr benötigt werden. Bei den bekannten Linearführungen sind die Linear-Kugellager in den Lagerwangen des Führungsschlittens festliegend angeordnet. Sie sollen auf Führungsschienen festliegenden Durchmessers möglichst spielfrei entlangrollen können, was jedoch allein schon toleranzbedingt nicht immer unbedingt der Fall ist. Die beiden Linear-Kugellager in jeder Lagerwange des Führungsschlittens besitzen parallel zueinander liegende Kugelumlaufreihen, die ihrerseits im Durchmesser ihnen eng angepaßte Führungsschienen erfordern. Eine gewisse spielfreie Anpassung zwischen der einzelnen Führungsschiene und den ihr zugeordneten beiden Kugelumlaufreihen jeder Lagerwange ist dadurch möglich, daß einerseits der beiderseitige Abstand der Führungsschienen durch dazwischen zu setzende Paßstücke variiert werden kann und andererseits beide Kugelumlaufreihen durch Exzenterverstellen ihres zwischen ihnen liegenden, gerundeten Stützlagerkörpers gemeinsam gegen die zugehörige Führungsschiene in begrenztem Umfang zu verlagern sind.

Aus der US-A-4 630 872 ist eine Linearführung bekannt: Die Führungsschiene ist im wesentlichen rechteckig und für doppelspurige Linear-Kugellager ausgebildet. Der Führungsschiene sind zwei Linear-Kugellager zugeordnet, von denen eins fest mit dem Schlitten und einer Platte verbunden ist, an der das andere Linear-Kugellager relativbeweglich befestigt ist und von der Stellschraube im Sinne von Spielbeseitigung verstellt werden kann, wobei sich die Platte durchbiegt. Eine Verstellung in größerem Umfang ist aus den Konstruktionsgründen der Platte nicht möglich.

Aus der EP-A-0 187 336 ist eine Linearführung bekannt, deren Verstellbarkeit durch schienenparallele Bolzen bewirkt wird, mit denen eine begrenzte Verdrehung von Exzenterhülsen erreicht wird, mit denen die Wälzlager radial zur zugehörigen Führungsschiene beaufschlagt werden. Die Verdrehverstellung ist begrenzt, so daß nur eine Verstellung zur Beseitigung eines vergleichsweise geringen Führungsspiels möglich ist.

Aus der EP-A- 0 171 700 ist ein Spindelstock bekannt, der zwischen zwei Böcken mittels prismatischer Führungsleisten verfahrbar ist, die sich an Führungsschuhen der Böcke abstützen. Die Abstützung erfolgt über eine Gleitfläche und mittels einer Kugelumlauflagerung, wobei die Belastungsaufnahme der Kugeln zur Verteilung der Gesamtbelastung auf die Gleitfläche bzw. auf die Kugellagerung einstellbar ist. Die Einstellung erfolgt mittels eines der Verfahrrichtung des Spindelstocks parallelen Druckstücks eines Bocks, das im Rückführbereich der Kugeln auf diese drückt und selbst über eine Keilfläche mit einem Keilstück beaufschlagt wird, das von einer Verstellschraube des Bocks parallel zur Verfahrrichtung des Spindelstocks verschraubt werden kann. Mit der bekannten Einstellung wird lediglich eine Einstellung der Verteilung der Gesamtbelastung auf Kugellager und Gleitlager erreicht, was nur in vergleichsweise engen Grenzen möglich ist.

Aus der US-A-206 648 ist es bei einer Linearführung mit den eingangs genannten Merkmalen bekannt, eine Verstellung eines Linearwälzlagers dadurch zu erreichen, daß eine exzentrische Hülse mit einem Bolzen verdreht wird. Die Verdrehung kann lediglich über 90 Winkelgrad erfolgen, bedingt durch einen Stopstift. Infolgedessen ist nur eine entsprechend begrenzte Verdrehbewegung möglich. Es kann nur entsprechend geringes Spiel zwischen den Führungsschienen und den Lagern ausgeglichen werden. Eine Anpassung der Linearführung an Führungsschienen unterschiedlichen Durchmessers ist nicht möglich.

Der Erfindung liegt die Aufgabe zugrunde, eine Linearführung der eingangs erwähnten Gattung dahingehend zu verbessern und zu vervollkommnen, daß sie eine noch einfachere und exaktere spielfreie Einstellung der Linearkugellager und auch deren Anpassung an Führungsschienen von unterschiedlichem Durchmesser erlaubt sowie darüber hinaus auch etwaige Winkelfehler zwischen den Führungsschienen und dem auf ihnen abrollenden Führungsschlitten zu kompensieren ermöglicht.

Diese Aufgabe wird ausgehend von einer Linearführung der eingangs erwähnten Art erfindungsgemäß dadurch gelöst, daß die Stellschrauben radial in Richtung auf die Führungsschiene eingedreht sind, daß die Führungsschiene ein kreisrundes Profil besitzt, und daß die Stellschrauben der Umlaufkörper zum weiten Eindrehen bei einem Anpassen an unterschiedliche Führungsschienendurchmesser mit Kugellagerspiel übersteigenden Durchmesseränderungen ausgebildet sind.

Durch die voneinander unabhängige Einstellmöglichkeit jedes der beiden in einer Lagerwange des Führungsschlittens gelegenen Linear-Kugellagers kann eine spielfreie Führung zwischen dem Führungsschlitten und den Führungsschienen erzielt werden. Auch ist darüber hinaus eine weitgehende Anpassung der Linear-Kugellager an Führungsschienen unterschiedlichster Durchmesser möglich, ohne daß dabei von deren günstigsten Kugel-Auflagerstellen am Umfang der Führungsschienen abgerückt werden müßte. Das ist insbesondere dann nicht notwendig, wenn - wie das die Erfindung weiterhin vorsieht - die beiden jeweils in einer Lagerwange des Führungsschlittens gelegenen Linear-Kugellager rechtwinklig zueinander und unter einem Neigungswinkel von im wesentlichen 45° zu der durch die beiden Führungsschienen verlaufenden Mittelebene verstellbar sind.

Schließlich besteht ein weiterer wesentlicher Vorteil der erfindungsgemäßen Linearführung darin, daß bei ihr Neigungsfehler, wie sie etwa bei einer Schrägaufstellung des Schienenkörpers und seiner beidseitigen Führungsschienen vorkommen können, durch entsprechende Einzelverstellung der Linear-Kugellager ohne weiteres ausgeglichen werden können, mithin also auch in diesen Fällen eine exakte Horizontallage des Führungsschlittens zu erzielen ist.

Vorteilhaft besteht jedes Linear-Kugellager aus einem eine Kugelumlaufreihe längsmittig enthaltenden, im wesentlichen quaderförmigen Kugelumlaufkörper, der in einem zur zugehörigen Führungsschiene hin offenen Aufnahmeschlitz der Lagerwange ringsum gleitverschieblich geführt ist. Dafür besitzen die zu beiden Seiten unterhalb des Führungsschlittens angeordneten Lagerwangen zweckmäßig ein zur zugehörigen Führungsschiene hin offenes U-Profil, wobei die beiden Kugelumlaufkörper und die sie enthaltenden Aufnahmeschlitze in den inneren Ecken des Lagerwangenprofils gehrungsschnittartig liegend angeordnet sind. Das ergibt eine einfache präzis ausgerichtete Anordnung der beiden rechtwinklig zueinander und radial zur zugehörigen Führungsschiene verstellbaren Kugelumlaufkörper.

Die Kugelumlaufkörper können aus einem eine innen offene und außen geschlossene, geradlinige Kugellaufbahn enthaltenden, metallischen Mittelteil und zwei ihn beidendig abchließenden, je eine Kugelumlenkbahn enthaltenden Endteilen aus insbesondere Kunststoff bestehen.

Die Verstellung der Kugelumlaufkörper kann über die verschiedenartigsten Stellschrauben erfolgen. Besonders einfach ist es, wenn sie über eine oder mehrere Stellschrauben erfolgt, die in in den äußeren Ecken der Lagerwangen des Führungsschlittens gelegenen Gewindebohrungen sitzen und am Rükken des metallischen Mittelteils der Kugelumlaufkörper angreifen. Durch die Anordnung an den äußeren Ecken der Lagerwangen des Führungsschlittens sind die Stellschrauben von außen bequem zugänglich. Es genügt für die Verstellbarkeit der Kugelumlaufkörper, wenn diese durch die Stellschrauben einfach mehr oder weniger weit gegen die Führungsschienen verschoben bzw. angestellt werden. Darüber hinaus können die Stellschrauben aber auch in den Kugelumlaufkörpern etwa drehbeweglich und axial unverschieblich gelagert sein, so daß sie je nach Drehbewegung die Kugelumlaufkörper zwangläufig in der einen wie der anderen Richtung zu verstellen erlauben.

Für besondere Anwendungszwecke, bei denen es vor allem auch auf die Abtragung größerer Kräfte ankommt, sieht die Erfindung weiterhin vor, daß zwei zu beiden Seiten des Kopfes einer T-förmig profilierten Trägerstruktur hochkant angeordnete Schienenkörper mit jeweils zwei oben und unten daran befestigten Führungsschienen vorhanden sind, und daß am Führungsschlitten beidseitig je zwei entsprechend angeordnete, obere und untere Lagerwangen mit je zwei in ihnen verstellbar gelagerten Kugelumlaufkörpern vorhanden sind. Dabei können die unteren Lagerwangen jeweils an den unteren Enden von am Führungsschlitten beidseitig angebrachten Seitenwangen angeordnet sein.

In der Zeichnung sind mehrere Ausführungs- und Anwendungsbeispiele erfindungsgemäß gestalteter Linearführungen wiedergegeben, die überwiegend der Einfachheit halber weitgehend schematisch dargestellt sind. Dabei zeigt
- Fig.1: eine erste Ausführungsform in der Stirnansicht und im teilweisen Schnitt nach der Linie I-I der
- Fig.2,: die einen Schnitt durch eine Lagerwange mit Kugelumlaufkörpern entsprechend der Linie II-II der Fig. 1 wiedergibt,
- Fig.3: eine der Fig.1 entsprechende Ausführungsform, jedoch mit im Durchmesser wesentlich kleineren Führungsschienen,
- Fig.4: die Stirnansicht der Linearführung bei zwischen Führungsschlitten und Führungsschienen bestehender Schräglage und
- Fig. 5: eine Linearführung mit insgesamt vier Führungsschienen und der dazugehörigen Anzahl von einzeln verstellbar gelagerten Kugelumlaufkörpern.

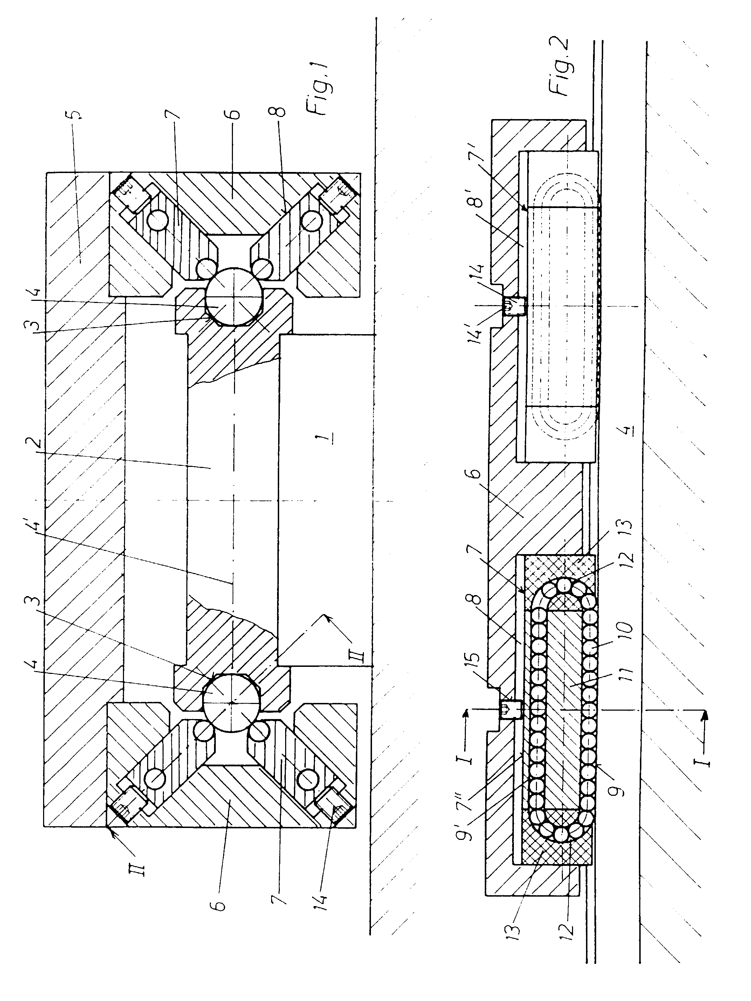

Die in den Fig.1 und 2 dargestellte Linearführung besitzt einen auf einem Tragsockel 1 fest angeordneten Schienenkörper 2, an welchem zu beiden Seiten in entsprechenden Längsaussparungen 3 je eine Führungsschiene 4 so befestigt ist, daß sie mit nahezu der Hälfte ihres Umfangs aus dem Schienenkörper 2 vorsteht. Die Führungsschienen 4 besitzen ein kreisrundes Profil und bestehen vorzugsweise aus Stahl, während der Schienenkörper 2 aus Alu bestehen kann.

Auf den beiden Führungsschienen 4 ist der vorzugsweise gleichfalls aus Alu bestehende Führungsschlitten 5 längsverschieblich gelagert. Er besitzt dazu zwei beidseitig unterhalb von ihm befestigte Lagerwangen 6, in denen je zwei an bestimmten Umfangsstellen der zugehörigen Führungsschiene 4 aufliegende Kugelumlaufkörper 7 vorhanden sind. Die Lagerwangen 6 besitzen zweckmäßig das dargestellte, zu den Führungsschienen 4 hin offene U-Profil. In ihren inneren Ecken sind gehrungsschnittlinienartig Aufnahmeschlitze 8 für je einen der darin allseitig gleitverschieblich geführten Kugelumlaufkörper 7 vorhanden. wie die Fig.2 zeigt, sind in jeder Lagerwange 6 je zwei Kugelumlaufkörper 7,7' und sie enthaltende Aufnahmeschlitze 8 bzw. 8' gleichachsig hintereinander angeordnet, so daß jede Lagerwange 6 insgesamt vier solcher Kugellaufkörper 7 bzw. 7' enthält. Das trägt zur verkantungsfreien Führung des Schlittens 5, insbesondere bei solchen größerer Längenabmessungen, bei. Für kürzere Schlitten 5 kann grundsätzlich auch bereits ein Kugelumlaufkörper 7 in Längsrichtung ausreichend sein.

Jeder Kugelumlaufkörper 7 besteht, wie wiederum Fig.2 zeigt, vorteilhaft aus einem eine innen offene und außen geschlossene, geradlinige Laufbahn 9 bzw. 9' für die Kugelumlaufreihe 10 enthaltenden metallischen Mittelteil 11 und zwei letztere beidendig abschließenden, je eine Kugelumlenkbahn 12 enthaltenden Kunststoff-Endteilen 13.

Zur individuellen Verstellung der im wesentlichen quaderförmig gestalteten Kugelumlaufkörper 7 in den Aufnahmeschlitzen 8 der Lagerwangen 6 dient je eine etwa mit einem Innenmehrkant 14' versehene Stellschraube 14, die in einer Gewindebohrung 15 der Lagerwange 6 von außen zugänglich sitzt und gegen den Rücken 7'' des metallischen Mittelteils 11 des Kugelumlaufkörpers 7 bzw. 7' zu drücken vermag.

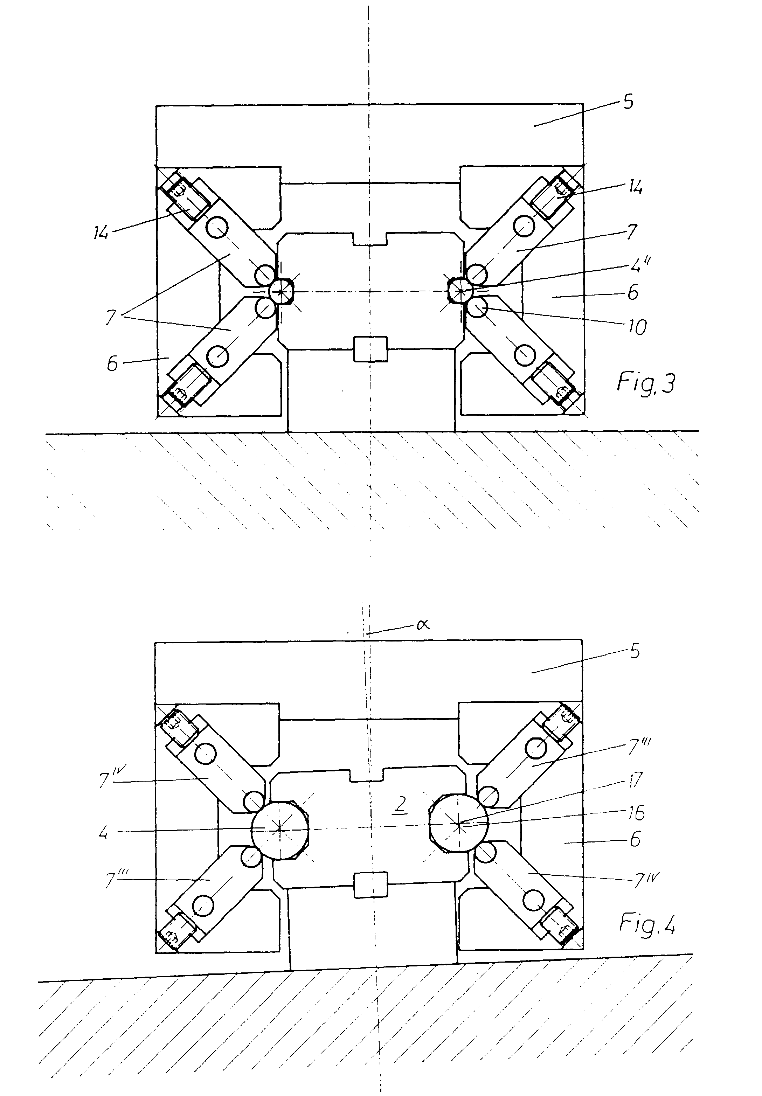

Wie die Fig.1 zeigt, sind die in jeder Lagerwange 6 vorhandenen beiden Kugelumlaufkörper 7 und naturgemäß auch die zu ihnen koaxial liegenden Kugelumlaufkörper 7' rechtwinklig zueinander und unter einem Neigungswinkel von im wesentlichen 45° zu der durch die beiden Führungsschienen 4 verlaufenden Mittelebene 4' verstellbar. Durch ihre voneinander unabhängige Einzelverstellbarkeit kann eine weitestgehende spielfreie Führung des Schlittens 5 auf den Schienen 4 erzielt werden. Darüber hinaus kann mit den gleichen Kugelumlaufkörpern 7 auch eine Anpassung an Führungsschienen 4'' von anderem, z.B. geringerem Durchmesser erzielt werden, wie das die Fig.3 zeigt. Dabei ist wesentlich, daß die Kugelumlaufkörper 7 mit ihrer Kugelreihe 10 an den gleichen, um 90° zueinander versetzt liegenden Umfangsstellen der zugehörigen Führungsschiene 4'' aufliegen und insoweit immer noch eine exakte abhebe- und verdrehungssichere einwandfreie Führung des Schlittens 5 ermöglichen. Um diese Anpassung zu erreichen, ist also nur ein entsprechend weites Eindrehen der Stellschrauben 14 mit entsprechend weiter Gleitverstellung der Kugelumlaufkörper 7 notwendig.

In Fig.4 ist dargestellt, wie man bei etwa schrägstehender Unterlage bzw. Schienenkörper 2 durch entsprechend unterschiedliches Verstellen der sich diagonal gegenüberliegenden Kugelumlaufkörper 7''' bzw. 7^{IV} eine dennoch exakt horizontal ausgerichtete Position des Schlittens 5 erhält, der also in diesem Falle unter einem entsprechenden Winkel α geneigt zum Schienenkörper 2 und zu dessen Führungsschienen 4 liegt. Es versteht sich, daß in diesem Falle die Verstellrichtungs-Schnittpunkte 16 der beiden Kugelumlaufkörper 7''',7^{IV} einer Lagerwange 6 nicht mit der Mittellängsachse 17 der Führungsschiene 4 zusammenfallen können, sondern davon entsprechend abweichen.

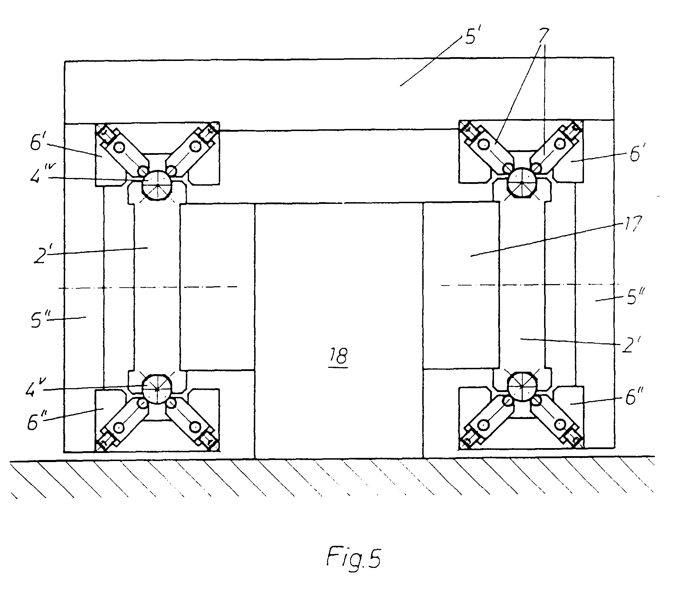

Bei dem in Fig. 5 dargestellten Ausführungsbeispiel sind zu beiden Seiten des Kopfes 17 einer insgesamt T-förmig profilierten Trägerstruktur 18 hochkant angeordnete Schienenkörper 2' angeordnet, die jeweils oben und unten mit einer daran vorspringend befestigten Führungsschiene 4^{IV} bzw. 4^{V} versehen sind. Dementsprechend weist hier der Führungsschlitten 5' an seinen beiden Seiten je zwei entsprechend angeordnete, obere und untere Lagerwangen 6' bzw. 6'' mit je zwei in ihnen verstellbar gelagerten Kugelumlaufkörpern 7 auf. Zur Halterung der unteren Lagerwangen 6'' sind am Führungsschlitten 5' beidseitig angebrachte entsprechend tief reichende Seitenwangen 5'' vorgesehen, an deren unteren Enden die Lagerwangen 6'' mit den darin liegenden Kugelumlaufkörpern 7 angebracht sind.

## Patentansprüche

1. Linearführung mit zwei beiderseits eines Schienenkörpers (2) vorspringend angeordneten, achsparallel zueinander verlaufenden Führungsschienen (4) und einem darauf längsverschiebbar geführten Schlitten (5), der sich dabei über je zwei in seitlichen, die Führungsschienen (4) umgreifenden Lagerwangen (6) des Schlittens (5) gelegene Linear-Kugellager an zwei verschiedenen Umfangsstellen jeder Führungsschiene (4) abstützt, wobei ein Umlaufkörper (7) jedes Linear-Kugellagers einzeln in den Lagerwangen (6) des Schlittens (5) mit einer Stellschraube (14) radial in Richtung auf die Führungsschiene (4) verstellbar gelagert ist, **wobei** die Stellschrauben (14) radial in Richtung auf die Führungsschiene (4) eingedreht sind, die Führungsschiene ein kreisrundes Profil besitzt, und die Stellschrauben (14) der Umlaufkörper (7) zum weiten Eindrehen bei einem Anpassen an unterschiedliche Führungsschienendurchmesser mit Kugellagerspiel übersteigenden Durchmesseränderungen ausgebildet sind.

2. Linearführung nach Anspruch 1, **dadurch gekennzeichnet,** daß die beiden jeweils in einer Lagerwange (6) des Führungsschlittens (5) gelegenen Linear-Kugellager rechtwinklig zueinander und unter einem Neigungswinkel von im wesentlichen 45° zu der durch die beiden Führungsschienen verlaufenden Mittelebene (4') verstellbar sind.

3. Linearführung nach Anspruch 2, **dadurch gekennzeichnet,** daß jedes Linear-Kugellager aus einem eine Kugelumlaufreihe (10) längsmittig enthaltenden, im wesentlichen quaderförmigen Kugelumlaufkörper (7) besteht, der in einem zur zugehörigen Führungsschiene (4) hin offenen Aufnahmeschlitz (8) der Lagerwange (6) ringsum gleitverschieblich geführt ist.

4. Linearführung nach Anspruch 3, **dadurch gekennzeichnet,** daß die zu beiden Seiten unterhalb des Führungsschlittens (5) angeordneten Lagerwangen (6) ein zur zugehörigen Führungsschiene (4) hin offenes U-Profil besitzen und die beiden Kugelumlaufkörper (7) und die sie enthaltenden Aufnahmeschlitze (8) in den inneren Ecken des Lagerwangenprofils gehrungsschnittartig liegend angeordnet sind.

5. Linearführung nach Anspruch 3, **dadurch gekennzeichnet,** daß die Kugelumlaufkörper (7) aus einem eine innen offene und außen geschlossene, geradlinige Kugellaufbahn (9 bzw. 9') enthaltenden, metallischen Mittelteil (11) und zwei ihn beidendig abschließenden, je eine Kugelumlenkbahn (12) enthaltenden Endteilen (13) aus insbesondere Kunststoff bestehen.

6. Linearführung nach Anspruch 5, **dadurch gekennzeichnet,** daß die Verstellung der Kugelumlaufkörper (7) über eine oder mehrere Stellschrauben (14) erfolgt, die in in den äußeren Ecken der Lagerwangen (6) des Führungsschlittens (5) gelegenen Gewindebohrungen (15) sitzen und am Rücken (7'') des metallischen Mittelteils (11) der Kugelumlaufkörper (7) angreifen.

7. Linearführung nach einem der Ansprüche 1 bis 6, **dadurch gekennzeichnet,** daß zwei zu beiden Seiten des Kopfes (17) einer T-förmig profilierten Trägerstruktur (18) hochkant angeordnete Schienenkörper (2') mit einer oben und unten daran vorspringend befestigten Führungsschiene (4^{IV} bzw. 4^{V}) vorhanden sind, und daß am Führungsschlitten (5') beidseitig je zwei entsprechend angeordnete, obere und untere Lagerwangen (6' bzw. 6'') mit je zwei in ihnen verstellbar gelagerten Kugelumlaufkörpern (7) vorhanden sind.

8. Linearführung nach Anspruch 7, **dadurch gekennzeichnet,** daß die unteren Lagerwangen (6'') an den unteren Enden von am Führungsschlitten (5') beidseitig angebrachten Seitenwangen (5'') angeordnet sind.

## Claims

1. Linear guide device comprising two guide rails (4), which are disposed protruding on both sides of a rail-borne body (2) and extend in an axis parallel manner with respect to each other, and a carriage (5) which is guided in a longitudinally displaceable manner on said guide rails and which is supported on two different peripheral points on each guide rail (4) by way of two linear ball bearings which lie in each case in lateral bearing cheeks (6) of the carriage (5) which engage the guide rails (4), wherein a revolving body (7) of each linear ball bearing is mounted individually in the bearing cheeks (6) of the carriage (5) in such a manner as to be adjustable radially in the direction of the guide rail (4) by means of an adjusting screw (14), wherein the adjusting screws (14) are screwed in radially in the direction of the guide rail (4), the guide rail comprises a circular profile, and the adjusting screws (14) of the revolving bodies (7) are designed such that they can be further screwed in when making adjustments to suit the different guide rail diameters with diameter changes which exceed the ball bearing clearance.

2. Linear guide device according to claim 1, characterised in that the two linear ball bearings which lie in each case in a bearing cheek (6) of the guide carriage (5) can be adjusted at a right angle with respect to each other and at an angle of inclination of substantially 45° with respect to the middle plane (4') which extends through the two guide rails.

3. Linear guide device according to claim 2, characterised in that each linear ball bearing consists of a ball bearing revolving body (7) which is substantially parallelepiped in shape and comprises in the longitudinal middle a ball bearing revolving row (10) and which ball bearing revolving body is guided all around in a slide-displaceable manner in a receiving slot (8) of the bearing cheek (6), which receiving slot is open towards the associated guide rail (4).

4. Linear guide device according to claim 3, characterised in that the bearing cheeks (6) disposed on both sides below the guide carriage (5) comprise a U-shaped profile which is open towards the associated guide rail (4) and the two ball bearing revolving bodies (7) and the receiving slots (8) which receive the said ball bearing revolving bodies are disposed in the inner comers of the bearing cheek profile lying in the form of a mitre cut.

5. Linear guide device according to claim 3, characterised in that the ball bearing revolving bodies (7) consist of a metal middle part (11) which comprises a straight ball bearing running track (9 or 9') which is inwardly open and outwardly closed, and two end parts (13) which close both ends of the said middle part and comprise in each case a ball bearing diversion track (12) and which end parts consist in particular of synthetic material.

6. Linear guide device according to claim 5, characterised in that the adjustment of the ball bearing revolving body (7) is performed by way of one or a plurality of adjusting screws (14) which sit in the threaded bores (15), which lie in the outer comers of the bearing cheeks (6) of the guide carriage (5), and which adjusting screws engage the back (7") of the metal middle part (11) of the ball bearing revolving bodies (7).

7. Linear guide device according to any one of claims 1 to 6, characterised in that two rail-borne bodies (2') disposed upright on both sides of the head (17) of a T-shaped profiled carrier structure (18) are provided with a guide rail (4^{IV} or 4^{V}) which is attached protruding above and below thereto and that at the guide carriage (5') on both sides in each case two correspondingly disposed upper and lower bearing cheeks (6' or 6") are provided with in each case two ball bearing revolving bodies (7) which are mounted in an adjustable manner therein.

8. Linear guide device according to claim 7, characterised in that the lower bearing cheeks (6") are disposed on the lower ends of the lateral cheeks (5") which are attached on both sides to the guide carriage (5').

## Revendications

1. Guide linéaire comprenant deux rails de guidage (4) parallèles axialement l'un à l'autre et disposés en saillie de part et d'autre d'un corps de rail (2), et un chariot (5) qui est guidé, mobile longitudinalement, sur les rails, en s'appuyant sur deux points périphériques différents de chaque rail de guidage (4) par l'intermédiaire de deux roulements à billes linéaires latéraux placés dans des flasques de montage latéraux (6) du chariot (5) qui entourent les rails de guidage (4), un corps de rotation (7) de chaque roulement à billes linéaire étant monté individuellement dans les flasques de montage (6) du chariot (5) de manière à être réglable radialement en direction du rail de guidage (4) à l'aide d'une vis de réglage (14), étant précisé que les vis de réglage (14) sont vissées radialement en direction du rail de guidage (4), que le rail de guidage présente un profil circulaire et que les vis de réglage (14) des corps de rotation (7), pour un vissage plus important lors d'une adaptation à des diamètres de rails de guidage différents, présentent des variations de diamètre supérieures au jeu des roulements à billes.

2. Guide linéaire selon la revendication 1, **caractérisé** en ce que les deux roulements à billes linéaires situés dans un flasque de montage (6) du chariot de guidage (5) sont réglables à angle droit l'un par rapport à l'autre et suivant un angle d'inclinaison de 45°, globalement, par rapport au plan médian (4') qui traverse les deux rails de guidage.

3. Guide linéaire selon la revendication 2, **caractérisé** en ce que chaque roulement à billes linéaire se compose d'un corps de rotation à billes (7) qui contient en son centre longitudinal une rangée de circulation de billes (10), qui a globalement la forme d'un parallélipipède et qui est apte à coulisser en cercle dans une fente de logement (8) du flasque de montage (6) qui est ouverte vers le rail de guidage (4) correspondant.

4. Guide linéaire selon la revendication 3, **caractérisé** en ce que les flasques de montage (6) disposés des deux côtés, au-dessous du chariot de guidage (5), comprennent un profilé en U ouvert vers le rail de guidage (4) correspondant, et les deux corps de rotation à billes (7) et les fentes de logement (8) qui les contiennent sont disposés à plat, à la manière d'une coupe d'onglet, dans les coins intérieurs du profilé de flasque de montage.

5. Guide linéaire selon la revendication 3, **caractérisé** en ce que les corps de rotation à billes (7) se composent d'un élément central (11) en métal qui contient un chemin de roulement à billes rectiligne (9, 9') ouvert à l'intérieur et fermé à l'extérieur, et de deux éléments d'extrémité (13) en matière plastique, notamment, qui font suite à l'élément central (11), des deux côtés, et qui contiennent chacun une voie de déviation de billes.

6. Guide linéaire selon la revendication 5, **caractérisé** en ce que le réglage de chacun des corps de rotation à billes (7) se fait grâce à une ou plusieurs vis (14) qui sont logées dans des perçages filetés (15) situés dans les coins extérieurs des flasques de montage (6) du chariot de guidage (5), et qui agissent sur le dos (7") de l'élément central en métal (11) des corps de rotation à billes (7).

7. Guide linéaire selon l'une des revendications 1 à 6, **caractérisé** en ce qu'il est prévu deux corps de rails (2') qui sont disposés debout de part et d'autre de la tête (17) d'une structure porteuse profilée en T (18) et qui comportent, fixés en saillie sur eux, en haut et bas, des rails (respectivement 4^{IV} et 4^{V}), et en ce qu'il est prévu sur le chariot de guidage (5'), de chaque côté, deux flasques de montage supérieurs et inférieurs (respectivement 6' et 6") qui sont disposés en conséquence et dans lesquels sont montés, réglables, deux corps de rotation à billes (7).

8. Guide linéaire selon la revendication 7, **caractérisé** en ce que les flasques de montage inférieurs (6") sont disposés aux extrémités inférieures de flasques latéraux (5") montés de part et d'autre du chariot de guidage (5').
